# EUROPÄISCHE PATENTSCHRIFT

(11) **EP 3 440 402 B1**
(45) Veröffentlichungstag und Bekanntmachung des Hinweises auf die Patenterteilung: **04.08.2021**
(21) Anmeldenummer: 17712465.8
(22) Anmeldetag: 21.03.2017
(51) Int. Cl.: B60Q 3/64, F21V 8/00

(54) **BELEUCHTUNGSVORRICHTUNG FÜR EIN FAHRZEUG**
LIGHTING DEVICE FOR A VEHICLE
DISPOSITIF D'ÉCLAIRAGE POUR UN VÉHICULE

(30) Priorität: 06.04.2016 DE 102016205684
(43) Veröffentlichungstag der Anmeldung: 13.02.2019
(73) Patentinhaber: Bayerische Motoren Werke Aktiengesellschaft, 80809 München (DE)
(72) Erfinder: ISELE, Robert, 82256 Fuerstenfeldbruck (DE); MUELLER, Michael, 81243 München (DE)
(86) Internationale Anmeldenummer: PCT/EP2017/056606
(87) Internationale Veröffentlichungsnummer: WO 2017/174342

(56) Entgegenhaltungen:
- EP-A2- 2 143 991
- DE-A1-102010 012 745
- DE-A1-102013 104 169
- US-A1- 2010 027 256
- US-A1- 2014 321 139

## Beschreibung

Die Erfindung betrifft eine Beleuchtungsvorrichtung für ein Fahrzeug, das eine Lichtquelle, ein linienförmiges Lichtemissionselement zum Emittieren von Licht, das von der Lichtquelle über eine Einkopplungsfläche des Lichtemissionselements in das Lichtemissionselement gespeist wird, und ein Lichtleiterelement zur Verteilung und/oder Richtung von Licht, das von dem Lichtemissionselement in das Lichtleiterelement gespeist wird, umfasst. Die Erfindung betrifft ferner ein Innenausstattungsteil.

Es ist bekannt, für die Innenraumbeleuchtung eines Fahrzeugs eine Konturlinienbeleuchtung zu verwenden, welche primär den Zweck einer Akzentbeleuchtung erfüllt.

Die DE 10 2012 015 057 A1 umfasst eine Beleuchtungsvorrichtung für ein Fahrzeug, das eine Lichtquelle und einen Flächenlichtleiter umfasst, wobei die Lichtemission der Lichtquelle über eine als Lichteinkopplungsfläche ausgebildete Stirnfläche eines Flächenlichtleiters in den Flächenlichtleiter eingekoppelt wird.

Aus der DE 10 2010 030 660 A1 ist ein Innenausstattungsteil für ein Fahrzeug bekannt, das einen von einer Lichtquelle gespeisten Lichtleiter zum Emittieren von Licht und ein streifenförmiges Lichtleiterelement umfasst. Das Lichtleiterelement weist eine erste und eine zweite Oberfläche auf, wobei die erste Oberfläche eine der beiden größten Oberflächen des Lichtleiterelements ist. Die zweite Oberfläche ist eine von diesem abweichende Oberfläche und umfasst eine Einkopplungsfläche. Das Lichtleiterelement und der im Wesentlichen kreisrunde Lichtleiter sind so angeordnet und ausgestaltet, dass Licht von dem Lichtleiter über die Einkopplungsfläche in der ebenen ersten Oberfläche in das Lichtleiterelement einkoppelbar und über die zweite Oberfläche auskoppelbar ist. Dadurch wird eine Punkt- und Linienbeleuchtung mit geringen Ausmaßen bereitgestellt.

Die EP 2 530 503 A1 offenbart eine Beleuchtungseinrichtung mit einem stabförmigen Lichtleiter und einer Lichtquelle zur Lichteinspeisung in den Lichtleiter. Der stabförmige Lichtleiter weist einen, sich in einer Längsrichtung erstreckenden Streifen mit einer lichtbrechenden/zerstreuenden Strukturierung zur Erzeugung einer Hauptlichtrichtung im Sinne einer für den Betrachter durch die Krümmung des Lichtleiterquerschnitts vergrößerten Abbildung der Strukturierung auf. Der Lichtaustritt erfolgt über eine im Wesentlichen kreisbogenförmige Austrittsfläche. Die kreisbogenförmige Austrittsfläche liegt im Wesentlichen gegenüber dem Streifen mit der lichtbrechenden/zerstreuenden Strukturierung. Eine Lichteinkopplung erfolgt an der oder den Stirnseiten des stabförmigen Lichtleiters.

Bei diesen Beleuchtungsvorrichtungen sind lediglich statische Lichteffekte möglich, d.h. mittels der Lichtquelle kann die Helligkeit zwischen 0 und 100 % reguliert werden, wobei die Helligkeit des Lichtleiters über dessen Länge jedoch immer konstant ist. In Abhängigkeit der von der Lichtquelle abgegebenen Lichtfarbe ist es darüber hinaus möglich, einen bestimmten Farbeffekt zu erzielen, der ebenfalls über die Länge des Lichtleiters konstant ist.

Für eine erweitere Lichtinszenierung ist es erforderlich, eine Konturlinie mit mehreren Lichtquellen zeitlich veränderlich zu hinterleuchten. Die Integration von mehreren Lichtquellen ist jedoch teurer und aufwändiger als die eingangs beschriebene Lösung mit einem oder zwei an den stirnseitigen Enden des Lichtemissionselements angebrachten Lichtquellen. Darüber hinaus benötigt eine Beleuchtungsvorrichtung mit mehreren Lichtquellen einen anderen Aufbau als die einfache Variante mit lediglich einer oder zwei Lichtquellen an den stirnseitigen Enden des Lichtemissionselements. Das Erfordernis unterschiedlicher Bauteilvarianten ist jedoch aus Kostengründen unerwünscht.

Die US 2014/0321139 A1 offenbart eine Beleuchtungsvorrichtung für ein Fahrzeug, das eine Lichtquelle, ein linienförmiges Lichtemissionselement zum Emittieren von Licht, das von der Lichtquelle über eine Einkopplungsfläche des Lichtemissionselement in das Lichtemissionselement gespeist wird, und ein Lichtleiterelement zur Verteilung und/oder Richtung von Licht, das von dem Lichtemissionselement in das Lichtleiterelement gespeist wird, umfasst. Das Lichtemissionselement ist zumindest teilweise in einer einseitig offenen Kavität des Lichtleiterelements derart angeordnet, dass diese einen vorgegebenen Abstand zueinander aufweisen.

Die DE 10 2010 012 745 A1 offenbart eine Beleuchtungsvorrichtung für ein Fahrzeug, das eine Lichtquelle, ein linienförmiges Lichtemissionselement zum Emittieren von Licht und ein Lichtleiterelement zur Verteilung und/oder Richtung von Licht, das von dem Lichtemissionselement in das Lichtleiterelement gespeist wird, umfasst. Das Lichtemissionselement weist an einer dem Lichtleiterelement abgewandten Seite mehrere Auskoppelelemente auf, wobei das Lichtleiterelement auf diesen gegenüberliegenden Stellen Lichteintrittsflächen umfasst, die als einseitig offene Einformungen ausgebildet sein können.

Die EP 2 143 991 A2 offenbart eine Beleuchtungsvorrichtung, bei der eine Lichtquelle einen Träger mit einer Mehrzahl darauf angeordneter LEDs umfasst. Der Träger ist mechanisch mit einem Lichtleiterelement verbunden.

Die US 2010/0027256 A1 offenbart eine Beleuchtungsvorrichtung, bei der eine Lichtquelle in einer einseitig offenen Kavität eines Lichtemissionselement angeordnet ist.

Die DE 10 2013 104 169 A1 offenbart eine Beleuchtungsvorrichtung, dessen Lichtleiter eine einseitig offene Kavität umfasst. Ein Zusatzlichtleiter ragt abschnittsweise in die Kavität hinein, wobei ein Abstand zwischen Lichtleiter und Zusatzlichtleiter gebildet ist.

Es ist Aufgabe der Erfindung, eine Beleuchtungsvorrichtung für ein Fahrzeug sowie ein Innenausstattungsteil anzugeben, welche baulich und/oder funktional gegenüber den aus dem Stand der Technik bekannten Lösungen verbessert sind. Insbesondere soll unabhängig von der Anzahl der in einer Beleuchtungsvorrichtung verbauten Lichtquellen auf eine möglichst große Anzahl an Gleichbauteilen zurückgegriffen werden können.

Diese Aufgaben werden gelöst durch eine Beleuchtungsvorrichtung gemäß den Merkmalen des Patentanspruches 1 sowie ein Innenausstattungsteil gemäß den Merkmalen des Patentanspruches 11. Vorteilhafte Ausgestaltungen ergeben sich aus den abhängigen Patentansprüchen.

Die Erfindung schlägt eine Beleuchtungsvorrichtung für ein Fahrzeug vor, das eine Lichtquelle, ein linienförmiges Lichtemissionselement zum Emittieren von Licht, das von der Lichtquelle über eine Einkopplungsfläche des Lichtemissionselement in das Lichtemissionselement gespeist wird, und ein Lichtleiterelement, z.B. in Gestalt einer Streuscheibe, zur Verteilung und/oder Richtung von Licht, das von dem Lichtemissionselement in das Lichtleiterelement gespeist wird, umfasst.

Die Lichtquelle ist linienförmig ausgebildet und parallel zu dem Lichtemissionselement verlaufend angeordnet, so dass Licht von der Lichtquelle an einer Längsseite des Lichtemissionselements in die Einkopplungsfläche in das Lichtemissionselement einkoppelbar ist. Das Lichtemissionselement ist zumindest teilweise in einer einseitig offenen Kavität des Lichtleiterelements angeordnet.

Die Beleuchtungsvorrichtung zeichnet sich dadurch aus, dass das Lichtemissionselement kraft- und/oder formschlüssig gehalten sowie zerstörungsfrei von dem Lichtleiterelement lösbar ist. Ferner ist das Lichtemissionselement austauschbar mit einem im Querschnitt senkrecht zur Erstreckungsrichtung kreisrunden oder elliptischen Lichtemissionselement, bei dem an zumindest einer Stirnseite des Lichtemissionselements eine punktförmige Lichtquelle angeordnet ist.

Durch die Kavität ist eine mechanische Aufnahme für das Lichtemissionselement und der dem Lichtemissionselement zugeordneten Lichtquelle bereitgestellt. Das Lichtemissionselement kann in die Kavität "eingeclipst" werden, wobei durch einen Kraft- und/oder Formschluss eine sichere Halterung des Lichtemissionselements gegeben ist. Gemäß der hier vorgeschlagenen Variante ist die Lichtquelle linienförmig ausgebildet, so dass zumindest über einen Abschnitt der Längserstreckung des Lichtemissionselements Licht seitlich in das Lichtemissionselement eingekoppelt werden kann. Dadurch ist es möglich, mit Hilfe der erfindungsgemäßen Beleuchtungsvorrichtung dynamische Leuchteffekte oder Lichtinszenierungen zu erzielen.

Dadurch, dass das Lichtemissionselement zerstörungsfrei aus der als Aufnahme dienenden Kavität lösbar ist, kann ohne weiteres auch eine einfachere Kombination aus linienförmigem Lichtemissionselement und Lichtquelle in der Kavität angeordnet werden. Beispielsweise kann bei einer solchen, vereinfachten Anordnung die Lichtquelle lediglich ein einzelnes Leuchtelement umfassen, das Licht in die Stirnseite des Lichtemissionselements einspeist.

Unabhängig von der Ausgestaltung des Lichtemissionselements und der Lichtquelle kann das Lichtleiterelement als Gleichbauteil ausgestaltet werden. So ist es möglich, die hochwertige Variante mit dem linienförmigen Lichtemissionselement als Sonderausstattung zu verkaufen, während die einfachere Variante mit einer einzelnen Leuchteinheit der Lichtquelle für einfachere Ausstattungsvarianten eines Fahrzeugs vorgehalten werden kann. Ebenso ergibt sich die Möglichkeit, durch den Austausch des linienförmigen Lichtemissionselements samt der Lichtquelle auch zu einem späteren Zeitpunkt die Beleuchtungsvorrichtung mit einer höherwertigen Ausstattung zu versehen.

Gemäß einer zweckmäßigen Ausgestaltung ist das Lichtemissionselement mit der Lichtquelle zu einem Lichtmodul verbunden, wobei das Lichtmodul von dem Lichtleiterelement zerstörungsfrei lösbar ist. Auf diese Weise kann die Beleuchtungsvorrichtung auf einfache Weise wahlweise mit einem einfachen Lichtmodul oder einem hochwertigen Lichtmodul ausgestattet werden. Das einfache Lichtmodul umfasst ein linienförmiges Lichtemissionselement mit einer oder zwei Leuchteinheiten der Lichtquelle an den Stirnseiten des Lichtemissionselements. Demgegenüber umfasst das hochwertige Lichtmodul das linienförmige Lichtemissionselement und die linienförmig ausgebildete Lichtquelle, insbesondere mit einer Mehrzahl an Leuchteinheiten, welche parallel zu dem Lichtemissionselement verlaufend angeordnet sind.

Gemäß einer weiteren zweckmäßigen Ausgestaltung weist die Kavität in einem Querschnitt senkrecht zur Erstreckungsrichtung des Lichtleiterelements zumindest abschnittsweise eine kreisbogenförmige Gestalt auf, wobei der Kreisbogenabschnitt eine konkave Lichteintrittsfläche des Lichtleiterelements für aus dem Lichtemissionselement austretendes Licht ausbildet. Die kreisbogenförmige Gestalt der Kavität trägt dem Umstand Rechnung, dass Lichtemissionselemente eines einfachen Lichtmoduls in der Regel einen im Wesentlichen kreisförmigen Querschnitt aufweisen. Dieser ist erforderlich, um das an der oder den Stirnseiten eingespeiste Licht über Störstellen entlang des Lichtemissionselements quer zu dessen Längserstreckung aus dem Lichtemissionselement lenken zu können. Die kreisbogenförmige Gestalt der Kavität ermöglicht somit eine gute mechanische Halterung und einen einfachen Einbau des Lichtemissionselements in das Lichtemissionselement, obwohl die kreisbogenförmige Querschnittsform aus Gründen der Lichtausbreitung eher von Nachteil ist.

Um eine möglichst gute Einkopplung des Lichts von dem Lichtemissionselement in das Lichtleiterelement realisieren zu können, ist es in diesem Zusammenhang zweckmäßig, wenn das Lichtemissionselement in einem Querschnitt senkrecht zu dessen Erstreckungsrichtung zumindest abschnittsweise eine kreisbogenförmige Gestalt aufweist, wobei der Kreisbogenabschnitt eine konvexe Auskopplungsfläche für aus dem Lichtemissionselement austretendes Licht ausbildet. Insbesondere sind die konkave Lichteintrittsfläche des Lichtleiterelements und die konvexe Auskopplungsfläche des Lichtemissionselements aneinander angepasst, so dass diese - sich eng aneinander schmiegend - aneinander angrenzen, wenn das Lichtemissionselement in der Kavität des Lichtleiterelements angeordnet ist. Darüber hinaus wird durch diese Ausgestaltung auch sichergestellt, dass das Einclipsen des Lichtemissionselements in Kavität des Lichtleiterelements auf einfache und fehlertolerante Weise möglich ist.

Gemäß einer weiteren zweckmäßigen Ausgestaltung ist die Querschnittsform des Lichtemissionselements in einem Querschnitt senkrecht zu dessen Erstreckungsrichtung an die Form der Kavität angepasst, wobei die Querschnittsform des Lichtemissionselements außerhalb der Kavität von der Ausgestaltung und Anordnung der Lichtquelle abhängig ist. Die Anpassung der Querschnittsformen unterschiedlicher Lichtemissionselemente an die Form der Kavität ermöglicht, unabhängig von der Gestaltung der Querschnittsform jeweiliger Lichtemissionselemente außerhalb der Kavität, dessen kraft- und/oder formschlüssige Halterung sowie eine verlustfreie und gerichtete Einkopplung von Licht in das Lichtleiterelement.

Es ist ferner zweckmäßig, wenn das Lichtemissionselement in einem Querschnitt senkrecht zur Erstreckungsrichtung eine erste Längenausdehnung und eine, im Vergleich zu der ersten Längenausdehnung, größere Längenausdehnung aufweist, wobei sich die erste Längenausdehnung entlang der Kreissehne des Kreisbogens und die zweite Längenausdehnung quer dazu erstreckt. Durch die im Querschnitt längliche Gestalt des Lichtemissionselements eines hochwertigen Lichtmoduls kann eine gute Mischung verschiedener Farben, die von einer oder mehreren Leuchteinheiten abgegeben werden, bereits innerhalb des Lichtemissionselements erzielt werden. Dabei ist es unerheblich, wie die Lichtquelle mit der Anzahl an Leuchteinheiten in Relation zu der Öffnung der Kavität angeordnet ist.

Die Einheit aus Lichtemissionselement und Lichtquelle stellt das bereits erwähnte einfache Lichtmodul dar, welches erfindungsgemäß gegen das oben beschriebene, hochwertige Lichtmodul auf einfache Weise ausgetauscht werden kann.

Eine weitere Ausgestaltung sieht vor, dass die Bogenlänge des Kreisbogens der Kavität größer als die Hälfte des Außenumfangs des den Kreisbogen definierenden Kreises ist. Hierdurch ist sichergestellt, dass das Lichtemissionselement in der Kavität des Lichtleiterelements kraft- und/oder formschlüssig gehalten werden kann, da die Enden des die Kavität ausbildenden Lichtleiterelements das Lichtemissionselement zumindest leicht umschließen.

Um die Fertigung zu vereinfachen und eine Beschädigung beim Einbringen des Lichtemissionselements in die Kavität zu vermeiden, ist es zweckmäßig, das Lichtemissionselement aus einem flexiblen Material auszubilden.

Gemäß einer weiteren zweckmäßigen Ausgestaltung kann vorgesehen sein, das Lichtleiterelement einstückig mit einem aus lichtdichtem Material bestehenden Zierelement auszubilden. Das Lichtleiterelement, das beispielsweise aus durchscheinendem lichtstreuenden Material, wie z.B. Polycarbonat, gebildet sein kann, kann mit der Zierleiste aus lichtdichtem Material, z.B. schwarzem oder verchromtem ABS-Kunststoff, mit Hilfe eines Zweikomponentenspritzgussverfahrens bereitgestellt werden.

Die Erfindung schlägt ferner ein Innenausstattungsteil für ein Fahrzeug vor, welches eine Beleuchtungsvorrichtung der in dieser Beschreibung wiedergegebenen Beleuchtungsvorrichtung umfasst. Das Innenausstattungsteil weist die gleichen Vorteile auf, wie diese vorstehend in Verbindung mit der Beleuchtungseinrichtung beschrieben wurden.

Zweckmäßigerweise umfasst das Innenausstattungsteil ein Dekorelement in Gestalt des Zierelements.

Die Erfindung wird nachfolgend näher anhand eines Ausführungsbeispiels in der Zeichnung beschrieben. Es zeigen:
- Fig. 1: einen Querschnitt durch eine erfindungsgemäße Beleuchtungsvorrichtung mit einem Lichtmodul gemäß einer ersten Variante;
- Fig. 2: eine Ansicht des in Fig. 1 verbauten Lichtmoduls in einer Seitenansicht;
- Fig. 3: einen Querschnitt durch eine erfindungsgemäße Beleuchtungsvorrichtung mit einem Lichtmodul gemäß einer zweiten Variante;
- Fig. 4: eine Ansicht des in Fig. 3 verbauten Lichtmoduls in einer Seitenansicht.

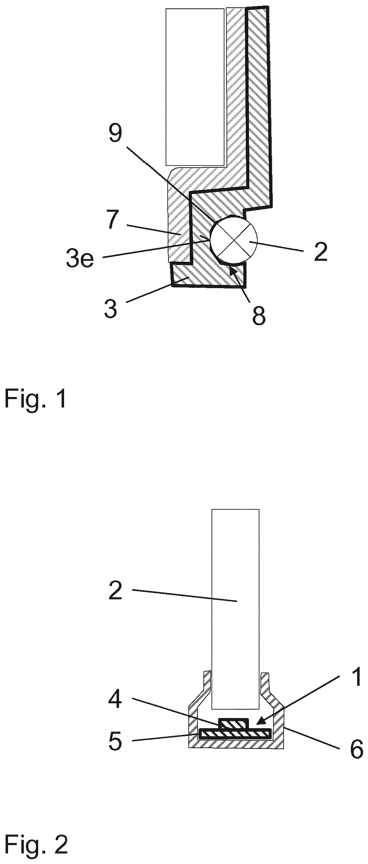

Die Figuren 1 und 2 zeigen ein erstes Ausführungsbeispiel einer erfindungsgemäßen Beleuchtungsvorrichtung für ein Fahrzeug, das als Innenausstattungsteil, z.B. an der Innenseite der Türen, für das Fahrzeug genutzt wird. Fig. 1 zeigt einen Schnitt durch die Beleuchtungsvorrichtung, Fig. 2 eine Seitenansicht eines in der Beleuchtungsvorrichtung eingesetzten Lichtmoduls gemäß einer ersten, einfachen Variante.

Die Beleuchtungsvorrichtung umfasst ein linienförmiges Lichtemissionselement 2, ein Streuscheibenelement 3 als Lichtleiterelement sowie ein Dekor- oder Zierelement 7. Das Lichtemissionselement 2, das Streuscheibenelement 3 und das Zierelement 7 erstrecken sich parallel in Fig. 1 in die Zeichenebene hinein. Das Lichtemissionselement 2 weist hier beispielhaft einen im Wesentlichen kreisrunden Querschnitt auf. Es besteht aus einem Kunststoff, z.B. PMMA, oder Glas und ist klar oder teiltransparent.

Das Lichtemissionselement 2 liegt in einer Kavität 8 des Streuscheibenelements 3. Die Kavität 8 weist zumindest abschnittsweise eine kreisbogenförmige Gestalt auf, wobei der Kreisbogenabschnitt 9 eine konkave Lichteintrittsfläche 3e des Streuscheibenelements 3 für aus dem Lichtemissionselement 2 austretendes Licht ausbildet. Der im Inneren der Kavität 8 liegende Teil des Lichtemissionselements 2 weist eine an die Gestalt der Kavität 8 angepasste Gestalt auf. Dies bedeutet, der in der Kavität 8 liegende Teil des Lichtemissionselements 2 weist ebenfalls eine zumindest abschnittsweise kreisbogenförmige Gestalt auf. Hierdurch bedingt liegen die Lichtauskopplungsfläche 2a des Lichtemissionselements 2 und die Lichteintrittsfläche 3e des Lichtleiterelements 3 eng aneinander an, so dass eine gezielte und vorhersagbare Einkopplung des aus dem Lichtemissionselement 2 austretenden Lichts in das Streuscheibenelement 3 sichergestellt ist.

Die Bogenlänge des Kreisbogens der Kavität 8 ist dabei größer als die Hälfte des Außenumfangs des den Kreisbogen definierenden Kreises, so dass die Kavität 8 das Lichtemissionselement 2 derart umschließt, dass eine kraft- und/oder formschlüssige Halterung des Lichtmoduls gegeben ist. Aufgrund einer Flexibilität des Materials des Streuscheibenelements 3 kann das Lichtemissionselement 2 lösbar aus der Kavität entnommen werden, ohne dabei das Streuscheibenelement 3 zu zerstören oder zu beschädigen.

Bei dem in Fig. 2 gezeigten, einfachen Lichtmodul, das eine Einheit aus dem Lichtemissionselement 2 und der Lichtquelle 1 darstellt, weist die Lichtquelle 1 eine einzelne Leuchteinheit 4, z.B. in Gestalt einer Leuchtdiode (LED), auf. Die Leuchteinheit 4 in Gestalt der Leuchtdiode ist auf einem Träger 5 angeordnet. Diese Einheit ist wiederum über ein Gehäuse 6 mit einem freien Ende des Lichtemissionselements 2 verbunden, so dass eine Einkopplung von Licht an der Stirnseite des Lichtemissionselements 2 erfolgen kann.

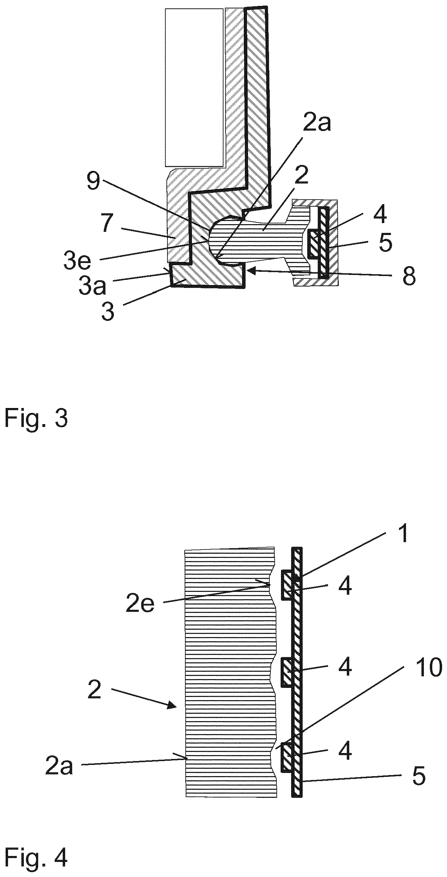

Die Figuren 3 und 4 zeigen ein zweites Ausführungsbeispiel einer erfindungsgemäßen Beleuchtungsvorrichtung, wobei lediglich das Lichtmodul, umfassend das Lichtemissionselement 2 und die Lichtquelle 1, gegenüber dem einfachen Lichtmodul aus dem Ausführungsbeispiel in Fig. 1 modifiziert ist. Ermöglicht wird der Austausch des einfachen Lichtmoduls des ersten Ausführungsbeispiels gemäß Fig. 2 durch das höherwertige Lichtmodul gemäß den Figuren 3 und 4 durch die ebenfalls abschnittsweise kreisbogenförmige Gestalt des hier im Wesentlichen im Querschnitt länglich ausgebildeten Lichtemissionselements 2. Dadurch ist es möglich, das Lichtemissionselement 2 der zweiten Variante in die Kavität 8 einzuclipsen, wobei der kreisbogenförmige Abschnitt, der die Lichtauskopplungsfläche 2a bildet, an die Lichteintrittsfläche 3e der Kavität 8 des Streuscheibenelementes 3 angrenzt. Dabei ist ein wesentlicher Teil des Lichtemissionselements 2 außerhalb der Kavität angeordnet.

Im Unterschied zum vorangegangenen Ausführungsbeispiel ist die Lichtquelle 1 im zweiten Ausgestaltungsbeispiel linienförmig ausgebildet und parallel zu dem Lichtemissionselement 2 verlaufend angeordnet, so dass Licht von der Lichtquelle 1 an einer Längsseite des Lichtemissionselements 2 in die Einkopplungsfläche 2e des Lichtemissionselements 2 einkoppelbar ist. Beispielhaft liegt die Lichtquelle 1 der Öffnung der Kavität 8 gegenüber, wobei jedoch auch eine seitliche Anordnung denkbar wäre. Fig. 4 zeigt eine geschnittene Draufsicht auf das Lichtmodul der Fig. 3. Hier ist ersichtlich, dass beispielhaft drei Leuchtelemente 4 auf einem Träger 5 angeordnet sind. Die Leuchtelemente 4 kommen in Aussparungen 10 des Lichtemissionselements 2 zum Liegen, um hier Licht in das Lichtemissionselement 2 einzukoppeln.

Das Zierelement 7 besteht in beiden Varianten aus einem lichtdichten Material, z.B. einem schwarzen oder verchromten ABS-Kunststoff. Das Zierelement 7 kann zusammen mit dem Streuscheibenelement 3, das aus durchscheinendem, lichtstreuendem Material, wie z.B. Polycarbonat, gebildet ist, im Zweikomponentenspritzgussverfahren gebildet werden.

Lediglich durch Einclipsen des einfachen Lichtmoduls (Figuren 1, 2) oder des hochwertigen Lichtmoduls (Figuren 3, 4), können somit unterschiedliche Varianten von Beleuchtungsvorrichtungen für ein Fahrzeug bereitgestellt werden. Dabei kann eine invariable Zierblende, welche das Zierelement 7 und das Streuscheibenelement 3 umfasst, verwendet werden.

Somit lassen sich verschiedene Angebote mit unterschiedlicher Lichtinszenierung bei gleichem geometrischem Erscheinungsbild mit niedrigem Kostenaufwand realisieren.

Durch die Austauschbarkeit des Lichtmoduls besteht die Möglichkeit, ein einfaches Lichtmodul durch ein höherwertiges Lichtmodul zu einem späteren Zeitpunkt auszutauschen. Dadurch lässt sich ein Baukastenprinzip realisieren.

### Bezugszeichenliste

- 1: Lichtquelle
- 2: Lichtemissionselement
- 2e: Einkopplungsfläche des Lichtemissionselements 2
- 2a: Auskopplungsfläche des Lichtemissionselements 2
- 3: Streuscheibenelement
- 3e: Eintrittsfläche des Streuscheibenelementes 3
- 3a: Austrittsfläche des Streuscheibenelementes 3
- 4: Leuchteinheit
- 5: Träger für eine Mehrzahl an Leuchteinheiten
- 6: Gehäuse
- 7: Zierelement
- 8: Kavität
- 9: Kreisbogenabschnitt der Kavität 8
- 10: Aussparung

## Patentansprüche

1. Beleuchtungsvorrichtung für ein Fahrzeug, umfassend:
- eine Lichtquelle (1);
- ein linienförmiges Lichtemissionselement (2) zum Emittieren von Licht, das von der Lichtquelle (1) über eine Einkopplungsfläche (2e) des Lichtemissionselements (2) in das Lichtemissionselement (2) gespeist wird;
- ein Lichtleiterelement (3) zur Verteilung und/oder Richtung von Licht, das von dem Lichtemissionselement (2) in das Lichtleiterelement (3) gespeist wird, wobei,
- die Lichtquelle (1) linienförmig ausgebildet ist und parallel zu dem Lichtemissionselement (2) verlaufend angeordnet ist, so dass Licht von der Lichtquelle (1) an einer Längsseite des Lichtemissionselements (2) in die Einkopplungsfläche (2e) in das Lichtemissionselement (2) einkoppelbar ist;
- das Lichtleiterelement (3) eine einseitig offene Kavität aufweist, wobei
- das Lichtemissionselement (2) zumindest teilweise in der einseitig offenen Kavität des Lichtleiterelements (3) angeordnet ist; **dadurch gekennzeichnet, dass** das Lichtemissionselement (2)
- kraft- und/oder formschlüssig gehalten ist sowie zerstörungsfrei von dem Lichtleiterelement (3) lösbar ist; und
- austauschbar ist mit einem im Querschnitt senkrecht zur Erstreckungsrichtung kreisrunden oder elliptischen Lichtemissionselement (2), bei dem an zumindest einer Stirnseite des Lichtemissionselements (2) eine punktförmige Lichtquelle (1) angeordnet ist.

2. Beleuchtungsvorrichtung nach Anspruch 1, **dadurch gekennzeichnet, dass** das Lichtemissionselement (2) mit der Lichtquelle (1) zu einem Lichtmodul verbunden ist, wobei das Lichtmodul von dem Lichtleiterelement (3) zerstörungsfrei lösbar ist.

3. Beleuchtungsvorrichtung nach Anspruch 1 oder 2, **dadurch gekennzeichnet, dass** die Kavität in einem Querschnitt senkrecht zur Erstreckungsrichtung des Lichtleiterelements (3) zumindest abschnittsweise eine Kreisbogenförmige Gestalt aufweist, wobei der Kreisbogenabschnitt eine konkave Lichteintrittsfläche (3e) des Lichtleiterelements (3) für aus dem Lichtemissionselement (2) austretendes Licht ausbildet.

4. Beleuchtungsvorrichtung nach einem der vorhergehenden Ansprüche, **dadurch gekennzeichnet, dass** Lichtemissionselement (2) in einem Querschnitt senkrecht zu dessen Erstreckungsrichtung zumindest abschnittsweise eine Kreisbogenförmige Gestalt aufweist, wobei der Kreisbogenabschnitt eine konvexe Auskopplungsfläche (2e) für aus dem Lichtemissionselement (2) austretendes Licht ausbildet.

5. Beleuchtungsvorrichtung nach Anspruch 4, **dadurch gekennzeichnet, dass** die konkave Lichteintrittsfläche (3e) des Lichtleiterelements (3) und die konvexe Auskopplungsfläche (2e) des Lichtemissionselements (2) aneinander angepasst sind, so dass diese aneinander angrenzen, wenn das Lichtemissionselement (2) in der Kavität des Lichtleiterelements (3) angeordnet ist.

6. Beleuchtungsvorrichtung nach einem der vorhergehenden Ansprüche, **dadurch gekennzeichnet, dass** die Querschnittsform des Lichtemissionselements (2) in einem Querschnitt senkrecht zu dessen Erstreckungsrichtung an die Form der Kavität angepasst ist, wobei die Querschnittsform des Lichtemissionselements (2) außerhalb der Kavität in Abhängigkeit der Ausgestaltung und Anordnung der Lichtquelle (1) abhängig ist.

7. Beleuchtungsvorrichtung nach Anspruch 6, **dadurch gekennzeichnet, dass** das Lichtemissionselement (2) in einem Querschnitt senkrecht zur Erstreckungsrichtung eine erste Längenausdehnung und eine zweite, im Vergleich zu der ersten Längenausdehnung größere Längenausdehnung aufweist, wobei sich die erste Längenausdehnung entlang der Kreissehne des Kreisbogens und die zweite Längenausdehnung quer dazu erstreckt.

8. Beleuchtungsvorrichtung nach einem der vorhergehenden Ansprüche, **dadurch gekennzeichnet, dass** die Bogenlänge des Kreisbogens der Kavität größer als die Hälfte des Außenumfangs des den Kreisbogen definierenden Kreises ist.

9. Beleuchtungsvorrichtung nach einem der vorhergehenden Ansprüche, **dadurch gekennzeichnet, dass** das Lichtemissionselement (2) aus einem flexiblen Material besteht.

10. Beleuchtungsvorrichtung nach einem der vorhergehenden Ansprüche, **dadurch gekennzeichnet, dass** das Lichtleiterelement (3) einstückig mit einem aus Lichtdichten Material bestehenden Zierelement ausgebildet ist.

11. Innenausstattungsteil für ein Fahrzeug, **dadurch gekennzeichnet, dass** dieses eine Beleuchtungsvorrichtung gemäß einem der vorhergehenden Ansprüche umfasst.

## Claims

1. Illumination apparatus for a vehicle, comprising:
- a light source (1);
- a line-shaped light emission element (2) for emitting light which is coupled into the light emission element (2) by the light source (1) via a coupling-in surface (2e) of the light emission element (2);
- a light guide element (3) for distributing and/or directing light which is coupled into the light guide element (3) by the light emission element (2), wherein
- the light source (1) is line-shaped and arranged parallel to the light emission element (2) such that light from the light source (1) is able to be coupled into the coupling-in surface (2e) into the light emission element (2) at a longitudinal side of the light emission element (2);
- the light guide element (3) has a cavity that is open on one side, wherein
- the light emission element (2) is arranged at least partially in the cavity of the light guide element (3) that is open on one side;
**characterized in that** the light emission element (2)
- is held with a force-fit and/or a form-fit and is releasable from the light guide element (3) without destruction, and
- is exchangeable for a light emission element (2) which is circular or elliptical in cross section perpendicular to the extent direction and in which at least at a front side of the light emission element (2) a point-shaped light source (1) is arranged.

2. Illumination apparatus according to Claim 1, **characterized in that** the light emission element (2) is connected to the light source (1) to form a light module, wherein the light module is releasable from the light guide element (3) without destruction.

3. Illumination apparatus according to Claim 1 or 2, **characterized in that** the cavity has at least partly a circular-arc shape in a cross section perpendicular to the extent direction of the light guide element (3), wherein the circular-arc section forms a concave light entry surface (3e) of the light guide element (3) for light exiting the light emission element (2).

4. Illumination apparatus according to one of the preceding claims, **characterized in that** the light emission element (2) has at least partly a circular-arc shape in a cross section perpendicular to the extent direction thereof, wherein the circular-arc section forms a convex coupling-out surface (2e) for light exiting the light emission element (2).

5. Illumination apparatus according to Claim 4, **characterized in that** the concave light entry surface (3e) of the light guide element (3) and the convex coupling-out surface (2e) of the light emission element (2) are matched to one another such that they adjoin one another if the light emission element (2) is arranged in the cavity of the light guide element (3).

6. Illumination apparatus according to one of the preceding claims, **characterized in that** the cross-sectional shape of the light emission element (2) in a cross section perpendicular to the extent direction thereof is matched to the shape of the cavity, wherein the cross-sectional shape of the light emission element (2) outside the cavity is dependent on the embodiment and arrangement of the light source (1).

7. Illumination apparatus according to Claim 6, **characterized in that** the light emission element (2) in a cross section perpendicular to the extent direction has a first longitudinal dimension and a second longitudinal dimension which is larger as compared to the first longitudinal dimension, wherein the first longitudinal dimension extends along the chord of the circular arc and the second longitudinal dimension extends transversely thereto.

8. Illumination apparatus according to one of the preceding claims, **characterized in that** the arc length of the circular arc of the cavity is greater than half the outer circumference of the circle defining the circular arc.

9. Illumination apparatus according to one of the preceding claims, **characterized in that** the light emission element (2) consists of a flexible material.

10. Illumination apparatus according to one of the preceding claims, **characterized in that** the light guide element (3) is formed in one piece with a trim element consisting of opaque material.

11. Interior design piece for a vehicle, **characterized in that** it comprises an illumination apparatus according to one of the preceding claims.

## Revendications

1. Dispositif d'éclairage pour un véhicule, comprenant :
- une source de lumière (1) ;
- un élément d'émission de lumière de forme linéaire (2) pour émettre de la lumière que la source de lumière (1) introduit dans l'élément d'émission de lumière (2) par l'intermédiaire d'une surface de couplage (2e) de l'élément d'émission de lumière (2) ;
- un élément guide de lumière (3) pour répartir et/ou diriger la lumière qui est introduite par l'élément d'émission de lumière (2) dans l'élément guide de lumière (3), dans lequel
- la source de lumière (1) est réalisée de forme linéaire et est disposée en s'étendant en parallèle à l'élément d'émission de lumière (2) de sorte que la lumière provenant de la source de lumière (1) peut être couplée sur un côté longitudinal de l'élément d'émission de lumière (2) dans la surface de couplage (2e) dans l'élément d'émission de lumière (2) ;
- l'élément guide de lumière (3) présente une cavité ouverte d'un côté, dans lequel
- l'élément d'émission de lumière (2) est disposé au moins en partie dans la cavité ouverte d'un côté de l'élément guide de lumière (3) ;
**caractérisé en ce que** l'élément d'émission de lumière (2)
- est maintenu par adhérence et/ou par complémentarité de forme, et peut être détaché de l'élément guide de lumière (3) de manière non destructive ; et
- est interchangeable avec un élément d'émission de lumière (2) circulaire ou elliptique en section transversale perpendiculairement à la direction d'extension, sur lequel une source de lumière (1) ponctuelle est disposée sur au moins une face frontale de l'élément d'émission de lumière (2).

2. Dispositif d'éclairage selon la revendication 1, **caractérisé en ce que** l'élément d'émission de lumière (2) est relié à la source de lumière (1) en un module de lumière, le module de lumière pouvant être détaché de l'élément guide de lumière (3) de manière non destructive.

3. Dispositif d'éclairage selon la revendication 1 ou 2, **caractérisé en ce que** la cavité présente dans une section transversale, perpendiculairement à la direction d'extension de l'élément guide de lumière (3), une conformation au moins par endroits en forme d'arc de cercle, le segment d'arc de cercle réalisant une surface d'entrée de lumière concave (3e) de l'élément guide de lumière (3) pour la lumière sortant de l'élément d'émission de lumière (2).

4. Dispositif d'éclairage selon l'une quelconque des revendications précédentes, **caractérisé en ce que** l'élément d'émission de lumière (2) présente dans une section transversale, perpendiculairement à sa direction d'extension, une conformation au moins par endroits en forme d'arc de cercle, le segment d'arc de cercle réalisant une surface de découplage convexe (2e) pour la lumière sortant de l'élément d'émission de lumière (2).

5. Dispositif d'éclairage selon la revendication 4, **caractérisé en ce que** la surface d'entrée de lumière concave (3e) de l'élément guide de lumière (3) et la surface de découplage convexe (2e) de l'élément d'émission de lumière (2) sont adaptées l'une à l'autre de sorte qu'elles sont adjacentes lorsque l'élément d'émission de lumière (2) est disposé dans la cavité de l'élément guide de lumière (3).

6. Dispositif d'éclairage selon l'une quelconque des revendications précédentes, **caractérisé en ce que** la forme de section transversale de l'élément d'émission de lumière (2) est adaptée en section transversale, perpendiculairement à sa direction d'extension, à la forme de la cavité, la forme de section transversale de l'élément d'émission de lumière (2) à l'extérieur de la cavité dépendant de la configuration et de la disposition de la source de lumière (1).

7. Dispositif d'éclairage selon la revendication 6, **caractérisé en ce que** l'élément d'émission de lumière (2) présente en section transversale, perpendiculairement à la direction d'extension, une première dimension longitudinale et une deuxième dimension longitudinale supérieure en comparaison avec la première dimension longitudinale, la première dimension longitudinale s'étendant le long de la corde de cercle de l'arc de cercle et la deuxième dimension longitudinale s'étendant transversalement à celle-ci.

8. Dispositif d'éclairage selon l'une quelconque des revendications précédentes, **caractérisé en ce que** la longueur d'arc de l'arc de cercle de la cavité est supérieure à la moitié de la circonférence extérieure du cercle définissant l'arc de cercle.

9. Dispositif d'éclairage selon l'une quelconque des revendications précédentes, **caractérisé en ce que** l'élément d'émission de lumière (2) est composé d'un matériau souple.

10. Dispositif d'éclairage selon l'une quelconque des revendications précédentes, **caractérisé en ce que** l'élément guide de lumière (3) est réalisé d'un seul tenant avec un élément décoratif composé d'un matériau opaque.

11. Pièce d'aménagement intérieur pour un véhicule, **caractérisé en ce qu'**elle comprend un dispositif d'éclairage selon l'une quelconque des revendications précédentes.
